# EUROPÄISCHE PATENTSCHRIFT

(11) **EP 2 060 699 B1**
(45) Veröffentlichungstag und Bekanntmachung des Hinweises auf die Patenterteilung: **10.02.2010**
(21) Anmeldenummer: 07120823.5
(22) Anmeldetag: 15.11.2007
(51) Int. Cl.: E04F 13/08, E04F 15/04, F16B 5/02

(54) **Halterung für Verkleidungselemente bzw. eine Unterkonstruktion für Verkleidungselemente**
Fixing device for covering elements or a supporting structure for covering elements
Dispositif de fixation d'éléments de revêtement ou structure de support pour éléments de revêtement

(43) Veröffentlichungstag der Anmeldung: 20.05.2009
(73) Patentinhaber: Guido Berger Produktmanagement GmbH, 33378 Rheda-Wiedenbrück (DE)
(72) Erfinder: Berger, Guido, 33378 Rheda-Wiedenbrück (EC)
(74) Vertreter: Schmidt, Frank-Michael

(56) Entgegenhaltungen:
- WO-A-01/57406
- CH-A- 270 176
- DE-A1- 10 327 312

## Beschreibung

Die vorliegende Erfindung betrifft eine Halterung für Verkleidungselemente bzw. eine Unterkonstruktion für Verkleidungselemente, und insbesondere betrifft die vorliegende Erfindung eine Halterung für Fassadenelemente bzw. eine Fassaden-Unterkonstruktion.

Eine Halterung für eine Fassadenkonstruktion ist beispielsweise aus der EP 0 309 778 A1 bekannt, wobei die Halterung gemäß dieser Druckschrift als ein einstückiger Befestigungswinkel ausgebildet ist. Der Befestigungswinkel weist zwei Schenkel mit abgewinkelten Randbereichen auf. Einer der Schenkel wird mit einer Schraube an einer Gebäudewand befestigt, der andere Schenkel weist zur Befestigung von Fassadenelementen zwei Befestigungslöcher sowie eine aus dem Material des Schenkels herausgebogene Klemmfeder auf. Die Klemmfeder dient zur vorläufigen Befestigung des Fassadenelements, welches nach entsprechender Ausrichtung mit dem Schenkel des Befestigungswinkels verschraubt wird.

Bei der Befestigung des Fassadenelements wird dieses zunächst in die Klemmfedern mehrerer Befestigungswinkel eingesteckt, wobei die Klemmfedern eine vorläufige Befestigung des Elements bewirken. Da eine Hauswand, auch wenn diese nicht beispielsweise verklinkert ist, niemals vollkommen eben ist, muss das Fassadenelement vor der Anschraubung, der eigentlichen Befestigung, ausgerichtet werden, und zwar indem das Fassadenelement bei entsprechenden Befestigungswinkeln gegenüber der Einsteckstellung weiter in die Klemmfeder geschoben oder aus dieser gezogen wird. Eine solche Ausrichtung ist langwierig und ungenau, da es nicht möglich ist, dass Fassadenelement um einen genau definierten Weg in der Klemmfeder zu bewegen.

Aus der WO 01/57406 A2 ist eine Vorrichtung zum verspannenden Verbinden von mit Abstand zueinander liegenden Bauteilen bekannt, wobei die Verbindung mit einem in einem Abstandsraum angeordneten Distanzstück und einem die beiden Bauteile verspannenden Spannstück erreicht wird. Aus der CH 270 176 A ist eine Aufhängevorrichtung für Verkleidungsplatten bekannt, welche eine mit den Verkleidungsplatten zu verbindende Einrichtung, einen in der Einrichtung axial verschiebbaren und feststellbaren Bolzen sowie eine als Träger der Verkleidungsplatten dienende, lösbar mit dem Bolzen verbundene Schiene aufweist. Schließlich ist aus der DE 103 27 312 A1 ein Abstandselement zum Einstellen eines Abstandes zwischen einer Wand und einem vor der Wand angeordneten Bauelement bekannt, wobei dieses Abstandselement ein an der Wand fixierbares Wandelement und ein an dem Bauelement fixierbares Verbindungselement aufweist, zwischen denen eine Stellhülse angeordnet ist.

Aufgabe der vorliegenden Erfindung ist es, eine Halterung für Verkleidungselemente bzw. eine Unterkonstruktion für Verkleidungselemente zu schaffen, die eine schnelle, genaue und einfache Justierung ermöglicht.

Diese Aufgabe wird erfindungsgemäß mit einer Halterung mit den Merkmalen des Patentanspruchs 1 gelöst. Erfindungsgemäß weist die Halterung ein Innenprofil auf, das drehfest, radial fixiert und axial verschiebbar gegenüber einem Außenprofil in diesem gelagert ist.

Eines der beiden Profile weist einen Befestigungsfuß auf, über den die Halterung mit entsprechenden Befestigungsmitteln an einem Untergrund befestigt wird. Das andere Profil weist einen Montagekopf auf, an welchem die zu befestigenden Verkleidungselemente oder die Unterkonstruktion für diese Verkleidungselemente befestigt werden, wobei diese Befestigung auf eine beliebige, dem Fachmann bekannte Weise erfolgen kann. Die beiden ineinandergreifenden Profile erstrecken sich in axialer Richtung derart zwischen dem Befestigungsfuß und dem Montagekopf, dass der Abstand zwischen dem Befestigungsfuß und dem Montagekopf durch die Länge des Eingriffs des Innenprofils in das Außenprofil bestimmt ist. Die ineinandergreifenden Profile definieren die Längsachse der Halterung, wobei sich die Längsachse auch zentral durch den Montagekopf und den Befestigungsfuß erstreckt. Die Eingriffslänge zwischen dem Innen- und dem Außenprofil vermindert sich, wenn die Gesamtlänge der Halterung vergrößert wird - entsprechend vergrößert sich die Eingriffslänge, wenn Länge der Halterung vermindert wird.

Die Halterung umfasst ferner eine Schraube, die sich durch zumindest einen Teil des Außenprofils und des Innenprofils erstreckt, und einen Schraubenkopf, ein Justiermittel und ein in das Innengewinde eingreifendes Außengewinde aufweist.

Das Innenprofil weist ein sich in axialer Richtung erstreckendes Innengewinde oder ein ein solches Innengewinde aufweisendes, axial und drehfest zwischen zwei Stegen des Innengewinds festgelegtes Bauteil auf. Welche der beiden Alternativen bei einer bestimmten Halterung zu wählen ist, hängt maßgeblich von dem Material des Innenprofils ab. Ist dieses Material zu weich, kann zwar ein Gewinde in das Profil eingebracht (beispielsweise eingefräst) werden, dieses würde aber nicht ausreichend hohe Kräfte aufnehmen können. In einem solchen Fall sollte in dem Innenprofil ein Bauteil angeordnet sein, welches das Innengewinde aufweist. Ist das Innenprofil aus einem ausreichend harten Material gefertigt, kann auf das zusätzliche Bauteil verzichtet werden und das Innengewinde kann direkt in das Innenprofil eingebracht sein.

Der Schraubenkopf ist gegenüber dem Außenprofil axial festgelegt, aber drehbar, und auf das Justiermittel der Schraube kann derart zugegriffen werden, dass durch Drehen der Schraube die Länge des Eingriffs des Innenprofils in das Außenprofil einstellbar ist.

Bei der erfindungsgemäßen Halterung dient die Schraube also als Stellmittel, mit dem die Eingriffslänge des Innenprofils in das Außenprofil festgelegt wird. Die Festlegung der Eingriffslänge mit Hilfe einer Schraube ist gegenüber der bekannten Art der Justierung sehr viel genauer und auch schneller, da mit einer definierten Drehung der Schraube eine definierte Änderung der Eingriffslänge einhergeht. Die erfindungsgemäße Halterung ist konstruktiv einfach gehalten und lässt sich preisgünstig und in großen Stückzahlen herstellen. Die erfindungsgemäße Halterung ist universell bei beliebigen Untergründen einsetzbar. So ist es beispielsweise denkbar, die Halterung zur Befestigung von Deckenpaneelen oder bei der Verlegung von Holzplanken auf beispielsweise einer Terrasse zu verwenden. Vorzugsweise wird die Halterung jedoch bei der Befestigung von Fassadenelementen oder einer Unterkonstruktion für diese Elemente verwendet.

Die erfindungsgemäße Halterung kann entweder über das Innenprofil oder das Außenprofil an dem Untergrund befestigt sein. Dazu weist das Innenprofil oder das Außenprofil einen Befestigungsfuß auf, welcher mit Befestigungsmitteln an dem Untergrund fixiert wird.

Für den Fall, dass das Außenprofil den Befestigungsfuß aufweist, ist der Montagekopf an dem Innenprofil befestigt. Diese Art der Konstruktion ermöglicht eine vorteilhafte Weiterbildung der Halterung, bei der der Befestigungsfuß einstükkig mit dem Innenprofil ausgebildet ist.

Die Einstückigkeit des Innenprofils mit dem Befestigungsfuß vermindert die Anzahl der Bauteile der Halterung und erlaubt einen konstruktiv besonders einfachen und damit kostengünstigen Aufbau der Halterung. Weitere Vorteile der einstükkigen Ausbildung des Innenprofils mit dem Befestigungsfuß sind weiter unten ausgeführt.

Bei einer einstückigen Ausbildung des Innenprofils mit dem Befestigungsfuß kann der Schraubenkopf in dem Innenprofil selber axial festgelegt sein. In einem solchen Fall müsste der Montagekopf einen Gewindebereich aufweisen, mit welchem der Gewindebereich der Schraube wechselwirkt. Dies kann jedoch bei bestimmten Ausgestaltungen der Halterung bedingen, dass sich die Schraube bei Vergrößerung der Eingriffslänge des Innenprofils in das Außenprofil in den bzw. durch den Montagekopf schiebt.

Bevorzugt ist daher eine Weiterbildung, bei welcher der Schraubenkopf axial an dem Montagekopf festgelegt ist. Bei dieser Weiterbildung schiebt sich der Schraubenkörper bei Vergrößerung der Eingriffslänge, also Verminderung der Gesamtlänge der Halterung, weiter in das Innenprofil. Die Festlegung des Schraubenkopfes an dem Montagekopf kann beispielsweise erfolgen, indem die Schraube durch eine Öffnung in dem Montagekopf eingeschoben ist und der Schraubenkörper mit einem Haltemittel versehen ist, der ein Herausziehen der Schraube verhindert.

Bevorzugt ist jedoch eine Weiterbildung der erfindungsgemäßen Halterung, bei der der Schraubenkopf zwischen zwei Stegen des Montagekopfs axial festgelegt ist und einer der Stege eine Öffnung aufweist, über die der Schraubenkopf hinter den dem Innenprofil zugewandten Steg einführbar ist. Der Schraubenkopf ist so in dem Körper des Montagekopfs aufgenommen und hindert nicht bei einer Befestigung von Verkleidungselementen oder einer Unterkonstruktion an dem Montagekopf. Die Öffnung in dem dem Innenprofil zugewandten Steg des Montagekopfes ist vorzugsweise schlüssellochförmig ausgebildet. Der dem Innenprofil abgewandte Steg weist ebenfalls eine Öffnung auf, durch welche auf das Justiermittel zugegriffen werden kann, wobei durch Drehen der Schraube die Länge des Eingriffs des Innenprofils in das Außenprofil eingestellt wird. Bei einer derartigen Ausbildung der Halterung weist der Schraubenkopf das Justiermittel auf. Beispielsweise kann es sich bei dem Justiermittel um einen im Schraubenkopf ausgebildeten Innensechskant handeln.

Die Herstellung einzelner Bauteile der Halterung kann beispielsweise durch Blockguss erfolgen. Bei dem Blockgussverfahren handelt es sich um ein nicht-kontinuierliches Verfahren, welches insbesondere bei Bauteilen mit komplexer Struktur Anwendung findet.

Der Montagekopf, das Innen- und das Außenprofil sowie der Befestigungsfuß können bei einer besonders bevorzugten Weiterbildung der Halterung als Abschnitte eines Endlosprofils ausgebildet und damit im Stranggussverfahren herstellbar sein, wobei die Schnittebenen bei dem Montagekopf, dem Innenprofil und dem Befestigungsfuß - bezogen auf die Positionen der Bauteile in der Halterung - parallel zur Axialrichtung bzw. der Längsrichtung der Halterung verlaufen. Bezogen auf die Endlosprofile verlaufen diese Schnittebenen quer zu deren Längsachsen, was natürlich erst die Fertigung der Bauteile im Stranggussverfahren ermöglicht. Projiziert man die Längachsen der den Bauteilen zugrunde liegenden Endlosprofile in die Halterung bedeutet dies, dass diese Längsachsen einen Winkel von 90° zu der Längsachse der Halterung bilden. Die Schnittebenen des Außenprofils verlaufen - wieder bezogen auf die Position des Bauteils in der Halterung - quer zur Längsrichtung bzw. Axialrichtung der Halterung. Bezogen auf das dem Außenprofils zugrunde liegende Endlosprofil verlaufen diese Schnittebenen selbstverständlich wieder quer zu dessen Längsachse. Projiziert man diese Achse wiederum in die Halterung, bedeutet dies, dass diese Längsachse parallel zu der Längsachse bzw. Axialrichtung der Halterung verläuft. Eine derartige Ausgestaltung der Halterung wird erst durch den modularen Aufbau ermöglicht, da so verschiedene Abschnitte mehrerer Endlosprofile gegeneinander verdreht werden können. Auf diese Weise kann man in der Halterung Ebenen bzw. Stege quer zur Längsrichtung der Halterung erhalten, obgleich diese lediglich aus Stranggussabschnitten besteht. Eine solche Ausgestaltung ist besonders vorteilhaft, da die Bauteile schnell, preiswert und in großer Stückzahl hergestellt werden können, was einen großen ökonomischen Vorteil bedeutet. Natürlich müssen nach der Vereinzelung der Bauteile noch die notwendigen Öffnungen beispielsweise eingebohrt werden, was mit modernen Werkzeugmaschinen jedoch keinen übermäßigen Arbeitsaufwand bedeutet.

Bei der oben bereits beschriebenen einstückigen Ausbildung des Befestigungsfusses mit dem Innenprofil weist die Halterung nur vier wesentliche Bauteile auf - die Schraube, das Innen- und das Außenprofil sowie den Montagekopf. Auch das einstückig mit dem Befestigungsfuß ausgebildete Innenprofil kann ein aus einem Endlosprofil geschnittener Abschnitt sein, wodurch sich die Herstellungskosten noch einmal vermindern, da lediglich drei Teile im Strangguss herzustellen sind.

Die einzelnen Bauteile der Halterung können aus einem beliebigen geeigneten Material gefertigt sein, wobei die einzelnen Materialien an den Anwendungszweck anzupassen sind. Dient die Halterung beispielsweise zum Befestigen von Witterungseinflüssen ausgesetzten Fassadenelementen, so ist darauf zu achten, dass nicht rostende Materialien verwendet werden. Die Schraube ist in einem solchen Fall vorzugsweise aus rostfreiem Stahl bzw. Edelstahl gefertigt. Bei einer bevorzugten Ausführungsform der erfindungsgemäßen Halterung sind der Montagekopf, das Außen- und das Innenprofil sowie der Befestigungsfuß aus Aluminium oder einer Aluminiumlegierung gefertigt. Die aus Aluminium oder einer Aluminiumlegierung gefertigten Bauteile sind leicht, preisgünstig herzustellen und unempfindlich gegenüber Witterungseinflüssen.

Die Halterung wird an einem Untergrund befestigt, indem der Befestigungsfuß mit geeigneten Befestigungsmitteln an einem Untergrund fixiert wird. Die Befestigungsmitteln sind in der Regel aus einem Metall oder einer Metalllegierung gefertigt und üblicherweise in Schrauben-, Nieten- oder Nagelform ausgebildet. Derart ausgebildete Befestigungsmittel sind ausgesprochen gute Wärmeleiter. Bei der Fixierung des Befestigungsfußes werden derart ausgebildete Befestigungsmittel unter Umständen weit in den Untergrund getrieben, um für die nötige Stabilität zu sorgen. Wenn die Halterung zum Halten von Fassadenelementen oder einer entsprechenden Unterkonstruktion verwendet werden, sind die Befestigungsmittel in eine Hauswand eingebracht. Herrscht außerhalb eine geringere Temperatur als in dem Haus fungieren die Befestigungsmittel als Kältefinger.

Um einen Wärmeverlust über den Befestigungsfuß zu vermeiden, ist an diesem ein Isoliermittel angeordnet, welches sich im befestigten Zustand der Halterung zwischen dem Untergrund, beispielsweise einer Hauswand, und dem Befestigungsfuß befindet. Ein Wärmeverlust findet jedoch auch über die Befestigungsmittel statt, mit denen der Befestigungsfuß an dem Untergrund befestigt ist. Aufgrund des direkten Kontaktes Befestigungsfuß/Befestigungsmittel kann ein Wärmetransport zwischen diesen stattfinden. Bei einer besonders bevorzugten Weiterbildung der Halterung ist an dem Befestigungsfuß ein Isolationsmittel derart angeordnet, dass eine thermische Isolation zwischen dem Befestigungsfuß und einem Untergrund und zwischen dem Befestigungsfuß und Mitteln zum Befestigen des Befestigungsfußes an dem Untergrund gegeben ist. So wird verhindert, dass ein Wärmeverlust über den Befestigungsfuß stattfindet. Da auch der Wärmetransport zwischen dem Befestigungsfuß und den Befestigungsmitteln unterbunden ist, ist der Wärmeverlust über die Halterung bei dieser Weiterbildung besonders gering.

Bei einer bevorzugten Weiterbildung der erfindungsgemäßen Halterung weist die Schraube ein Haltemittel auf, das einen Anschlag für das Innenprofil bereitstellt. Dieser Anschlag verhindert, dass die Schraube bei der Verminderung der Eingriffslänge zwischen dem Innenprofil und dem Außenprofil über die durch das Haltemittel definierte Stellung hinaus bewegt wird. Auf diese Weise wird sichergestellt, dass stets eine die Stabilität der Halterung gewährleistende Eingriffslänge gegeben ist. Das Haltemittel kann beispielsweise auf das Außengewinde der Schraube aufgedreht oder in eine quer zur Längsrichtung der Schraube verlaufende Bohrung eingesteckt sein.

Zur Unterstützung bei der Justierung der Halterung ist bei einer bevorzugten Weiterbildung der Halterung in Längsrichtung des Innenprofils auf diesem eine Skala angeordnet. Die Skala kann beispielsweise in das Innenprofil eingeprägt oder auf dieses aufgeklebt sein. Die Skala kann derart gestaltet sein, dass ein Bereich der Skala optisch vor einer zu geringen Eingriffslänge zwischen Außen- und Innenprofil warnt. Die Skala ist üblicherweise in mm-Abschnitte unterteilt, die beispielsweise die Eingriffslänge zwischen den Profilen aufzeigt. Bei einer Ausführungsform kann die Skala als eine Doppelskala ausgebildet sein, die neben mm-Abschnitten auch Angaben darüber aufweist, bei welcher Eingriffslänge das Halteelement welche Kräfte aufnehmen kann.

Die Ausbildung des eigentlichen Montagebereiches des Montagekopfes, also des Bereichs, an welchem Elemente der Verkleidung oder der Unterkonstruktion befestigt werden können, kann an den jeweiligen Anwendungszweck beliebig angepasst sein. Bei einer bevorzugten Weiterbildung der erfindungsgemäßen Halterung jedoch ist der Montagekopf U-förmig ausgebildet und die Schenkelinnenseiten weisen jeweils zumindest eine Nut auf, wobei sich die Nuten quer zur Schenkelrichtung erstrekken. Bezogen auf die Längsrichtung der Halterung besagt diese Ausrichtung der Nuten, dass diese quer zur Längsrichtung verlaufen. Eine solche Ausrichtung der Nuten beeinflusst nicht die Herstellung des Montagekopfs als Abschnitt eines Endlosprofils. In die Nuten können beispielsweise entsprechende Vorsprünge der zu befestigenden Elemente eingreifen, so dass Zugkräfte, die auf die Elemente wirken, von den Nuten bzw. den Vorsprüngen aufgenommen werden. Die Anzahl der Nuten pro Schenkelinnenseite ist variabel und kann an den jeweiligen Anwendungszweck angepasst werden. Natürlich können die Nuten auch parallel zur Längsrichtung verlaufen, jedoch müssen diese für den Fall, dass der Montagekopf ein Abschnitt eines Längsprofils ist, nachträglich in diesen eingebracht werden. Ferner können die Nuten dann je nach Ausrichtung des Montagekopfes nicht mehr dazu beitragen, Zugkräfte aufzunehmen.

Die Befestigung der Verkleidungselemente bzw. der Unterkonstruktion an den Montageköpfen kann auf eine beliebige, dem Fachmann bekannte Art erfolgen. So kann beispielsweise jede Halterung einzeln mit dem jeweiligen zu befestigenden Element verbunden werden - beispielsweise durch Nieten und durch eine Verschraubung. Eine derartige starre Befestigung berücksichtigt jedoch nicht die Längenausdehnung der Verkleidungselemente bzw. der Unterkonstruktion aufgrund von Temperaturschwankungen. Da die Halterung primär für einen Einsatz im Freien konzipiert ist, können diese Längenausdehnungen ganz erheblich sein. Bei einer bevorzugten Weiterbildung der Halterung weist daher zumindest einer der Schenkel des Montagekopfes zumindest zwei Bohrungen auf, von denen zumindest eine als sich quer zur Schenkelrichtung erstreckendes Langloch ausgebildet ist. Eine entsprechende Ausbildung des Montagekopfes ermöglicht eine einfache, die Längenausdehnung berücksichtige Befestigung, indem das zu befestigende Element bei lediglich einer Halterung ortfest an dem Montagekopf befestigt wird - beispielsweise durch eine Verschraubung oder dergleichen. Bei den übrigen Halterungen, die zum Befestigen des Elements verwendet werden, wird dieses Element mit entsprechenden Befestigungsmitteln nur über das Langloch befestigt, und zwar derart, dass eine Bewegung des Befestigungsmittels in den Langlöchern, bedingt durch die Längenausdehnung bzw. Längenverminderung des Elements, gewährleistet ist, während das Element weiterhin durch das Befestigungsmittel gegen eine Bewegung parallel zur Schenkelrichtung gesichert ist. Auf diese Weise ist sichergestellt, dass sich das Element aufgrund der Längenveränderungen zwar quer zur Schenkelrichtung nicht jedoch parallel zu dieser bewegen kann. Aufgrund der ortsfesten Fixierung des Elements an lediglich einer Halterung kann die Längenausdehnung (und entsprechend die Längenverminderung) von dem Befestigungspunkt aus betrachtet jeweils nur in eine Richtung erfolgen. Eine Verschiebung des Elements über die Zeit kann so vermieden werden. Einer Materialermüdung, die aufgrund der Längenausdehnung auftreten würde, wäre das Element bei mehreren Stellen ortfest fixiert, kann auf diese Weise ebenfalls entgegen gewirkt werden.

Bei einer bevorzugten Weiterbildung der Halterung ist in dem U-förmigen Montagekopf lösbar zumindest ein Rastmittel angeordnet, mit welchem ein Element der Verkleidung oder der Unterkonstruktion rastend montierbar ist. Ein solches Rastmittel kann beispielsweise U-förmig ausgebildet sein, wobei es in einem solchen Fall über jeweils eine Bohrung in den Montagekopfschenkeln an dem Montagekopf lösbar und justierbar befestigt ist. Im gelösten Zustand ist das Rastmittel zwar mit dem Montagekopf verbunden, jedoch kann das zu befestigende Element in den Raum zwischen den Rastmittelschenkeln und den Montagekopfschenkeln eingeschoben werden, woraufhin das Rastmittel weiter fixiert und dabei das Element rastend montiert wird. Bei einer derartigen Ausgestaltung des Rastmittels ist natürlich dafür zu Sorgen, dass der Bereich zwischen den Schenkeln flexibel ist.

Das Rastmittel kann jedoch auch zweiteilig ausgebildet sein. In diesem Fall ist jeweils ein Rastelement bei einem der Schenkel des Montagekopfes lösbar und justierbar befestigt.

Bei der Verwendung obiger Rastmittel ist die Fixierung des Elements besonders einfach. Dieses wird einfach eingesteckt und über das bzw. die Rastmittel fixiert. Zur Befestigung muss also beispielsweise keine Öffnung in das Element gebohrt werden - eine Bearbeitung des Elements zur Befestigung dieses entfällt vollständig. Dies erhöht noch einmal die Justagegenauigkeit, da eine Bearbeitung des zu befestigenden Elements stets mit einem Genauigkeitsverlust bezüglich der Befestigungsposition einhergeht.

Im nachfolgenden wird die Erfindung unter Bezugnahme auf in den Figuren dargestellte Ausführungsbeispiele näher beschrieben, wobei
Figur 1a eine schematische Schnittansicht eines ersten Ausführungsbeispiels der erfindungsgemäßen Halterung zeigt,
Figur 1b eine Schnittansicht entlang der Ebene A-A von Figur 1a zeigt,
Figur 2 eine schematische Schnittansicht eines zweiten Ausführungsbeispiels der erfindungsgemäßen Halterung zeigt,
Figuren 3a und 3b Ansichten eines Ausführungsbeispiels eines Innenprofils zeigen, wobei Figur 3a eine Draufsicht und
Figur 3b eine Seitenansicht des Innenprofils darstellen,
Figur 4a eine Draufsicht eines weiteren Ausführungsbeispiels einer erfindungsgemäßen Halterung zeigt,
Figur 4b eine Schnittansicht entlang einer Ebene B-B des Ausführungsbeispiels gemäß Figur 4a zeigt,
Figur 4c eine detaillierte Draufsicht auf einen Montagekopf gemäß dem Ausführungsbeispiel von Figur 4a zeigt,
Figur 4d eine detaillierte Seitenansicht des Montagekopfes gemäß dem Ausführungsbeispiel von Figur 4a zeigt, und
Figuren 5a und 5b detaillierte Ansichten eines Rastmittels gemäß dem Ausführungsbeispiel von Figur 4a zeigen, wobei Figur 5a eine Draufsicht und Figur 5b eine Seitenansicht darstellt.

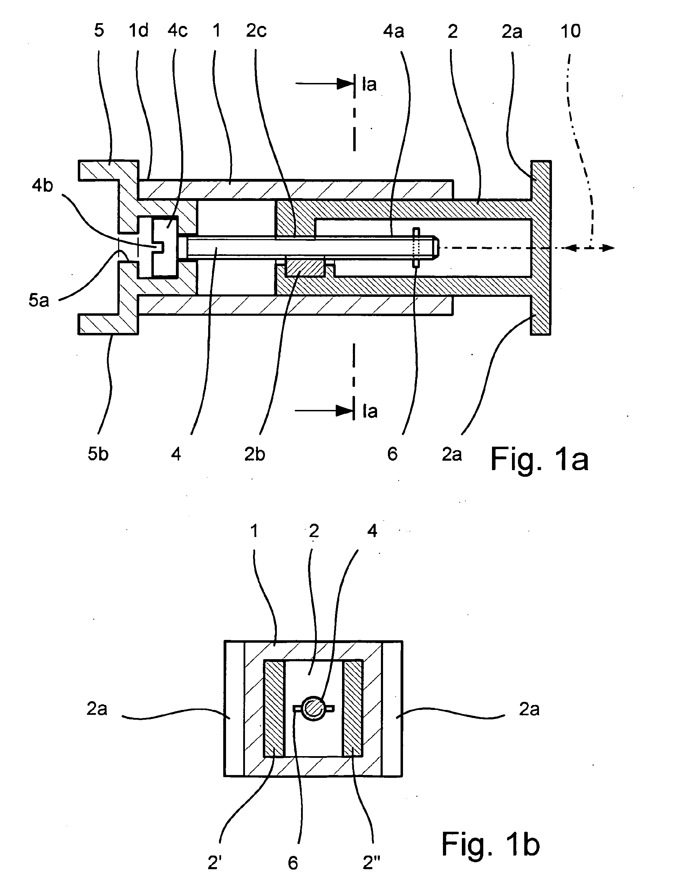

Figur 1a veranschaulicht eine schematische Schnittansicht eines ersten Ausführungsbeispiels der erfindungsgemäßen Halterung, wobei diese Ansicht lediglich das allgemeine Prinzip der Erfindung verdeutlichen soll - Details der erfindungsgemäßen Halterung sind bei dieser Ansicht nur teilweise dargestellt. Die Schnittebene verläuft horizontal durch die Zentralachse der Halterung, so dass Figur 1a eine Draufsicht auf diese Schnittebene darstellt.

Das Ausführungsbeispiel gemäß Figur 1a umfasst ein Innenprofil (2) mit einem Befestigungsfuß (2a), wobei dieser Befestigungsfuß (2a) einstückig mit dem Innenprofil (2) ausgebildet ist. Mit der gestichelten Linie (10), die sich zentral durch die gesamte Halterung erstreckt, ist die Längsrichtung bzw. die axiale Richtung der Halterung angedeutet. Das bei diesem Ausführungsbeispiel dargestellt Innenprofil (2) umfasst keine Stege bzw. Ebenen, die sich parallel zur Schnittebene erstrecken. Sämtliche Stege bzw. Ebenen erstrecken sich im rechten Winkel zur Schnittebene. Diese Ausgestaltung des Innenprofils (2) ermöglicht, dass dieses als Abschnitt eines Endlosprofils hergestellt werden kann.

Im Bereich des Befestigungsfußes (2a) kann das Innenprofil (über nicht dargestellte Befestigungsmittel) an einem geeigneten Untergrund befestigt werden. Bei einem dem Befestigungsfuß abgewandten Bereich weist das Innenprofil (2) einen Gewindebereich (2b, 2c) auf. Bei dem dargestellten Ausführungsbeispiel sind zwei verschiedene Arten der Bereitstellung eines Gewindes, d.h. zwei unterschiedliche Gewindebereiche, veranschaulicht. Bei einer zur Anwendung kommenden Ausführung der Halterung ist jedoch nur eine dieser Arten der Gewindebereitstellung verwirklicht, und zwar in Abhängigkeit von dem verwendeten Material sowie dem Anwendungszweck der Halterung. Das Gewinde wird dann natürlich vollumfänglich bereitgestellt, und nicht lediglich, wie in Figur 1a angedeutet, bei einer Hälfte der Halterung.

In der bezüglich des gezeigten Ausführungsbeispiels "oberen" Hälfte des Ausführungsbeispiels wird das Gewinde bereitgestellt, indem in die dem Befestigungsfuß abgewandten Stirnseite des Innenprofils ein Innengewinde (2c) eingebracht ist, welches mit einem sich durch die Halterung erstreckenden Außengewinde (4a) einer Schraube (4) in Eingriff steht. Das Innengewinde (2c) wird nach Herstellung des Innenprofils (2) mit geeigneten Verfahren in dieses eingebracht.

In der "unteren" Hälfte der Figur 1a ist das Innengewinde bereitgestellt, indem ein Bauteil mit einem Innengewinde (2b) bereitgestellt ist, welches zwischen zwei Stegen des Innenprofils axial und drehfest festgelegt ist. Das Innengewinde (2b) des Bauteils steht in Eingriff mit dem Außengewinde (4a) der Schraube (4).

Das Innenprofil (2) ist bei der in Figur 1a gezeigten Montagestellung teilweise von einem Außenprofil (1) umgeben. Das Außenprofil (1) ist in dem gezeigten Ausführungsbeispiel als durchgehender quadratischer Zylinder mit offenen Stirnseiten ausgeführt. Bei anderen Ausführungsbeispielen kann das Außenprofil (1) jedoch auch so ausgebildet sein, dass dieses in einer Ebene der Mantelfläche des Zylinders eine Ausnehmung in Längsrichtung aufweist. Eine solche Ausgestaltung des Zylinders kann zu einer Gewichtsreduktion der Halterung beitragen. Das Außenprofil (1) ist so ausgestaltet, dass auch dieses als Abschnitt eines Endlosprofils erhalten werden kann, wobei die Längsrichtung eines entsprechenden Profils parallel zu der Längsachse (10) der Halterung verlaufen würde.

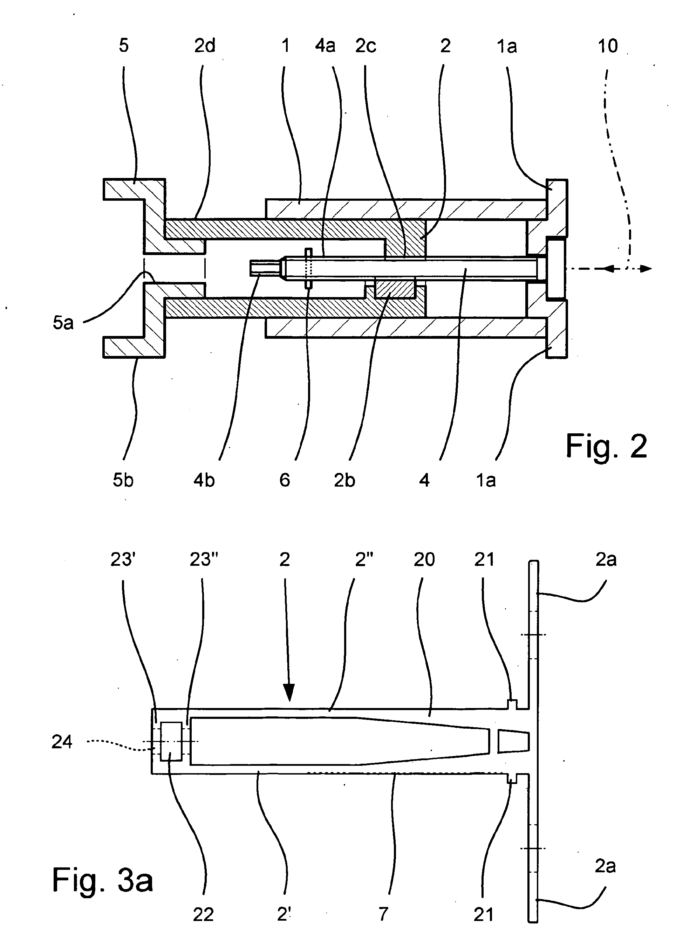

Die Eingriffstiefe zwischen dem Innenprofil (2) und dem Außenprofil (1) wird über die Schraube (4) eingestellt. Die Schraube (4) umfasst ein Außengewinde (4a), einen Schraubenkopf (4c) und ein Justiermittel (4b), über welches die Schraube (4) gedreht werden kann, und ist mit dem Schraubenkopf (4c) in einem an dem Außenprofil (1) befestigten Montagekopf (5) axial festgelegt. Das Außengewinde (4a) der Schraube (4) steht ferner in Eingriff mit dem bei dem Innenprofil (2) bereitgestellten Innengewinde (2b, 2c), so dass eine Drehbewegung der Schraube (4) die Eingriffslänge zwischen dem Innenprofil (2) und dem Außenprofil (1) beeinflusst. Bei dem gezeigten Ausführungsbeispiel ist das Justiermittel (4b) im Schraubenkopf (4c) angeordnet und hat die Form eines Innensechskants. Bei anderen Ausführungsbeispielen kann dieses Justiermittel auch anders gestaltet - siehe dazu beispielsweise auch Figur 2.

Die Schraube (4) umfasst ferner ein Haltemittel (6), dass bei einer vorgegebenen Position an der Schraube (4) befestigt ist, wobei die eingestellte Position gewährleistet, dass die Eingriffslänge zwischen den beiden Profilen nicht über ein minimal zulässiges Maß hinaus vermindert werden kann. Wird eine gewisse durch die Position des Haltemittels (6) an der Schraube (4) eingestellte minimale Eingriffslänge erreicht - bei maximalen Ausdehnung der Halterung in Längsrichtung - bildet das Haltemittel (6) einen Anschlag für das Innenprofil (2). Eine weitere Verminderung der Eingriffslänge ist dann nicht mehr möglich.

Bei einem Befestigungsbereich (1c) des Außenprofil (1) ist der Montagekopf (5) an dem Außenprofil (1) befestigt. Diese Befestigung erfolgt über eine dem Fachmann bekannte Technik. Beispielsweise ist der Montagekopf (5) bei dem Befestigungsbereich (1c) angenietet. Bei dem in Figur 1a gezeigten Ausführungsbeispiel ist der Schraubenkopf (4c) axial in dem Montagekopf (5) festgelegt, und zwar zwischen zwei Stegen, die sich orthogonal zur Längsrichtung der Halterung erstrecken. Um auf die in dem Montagekopf (5) angeordnete Schraube (4) zugreifen zu können, weist der Montagekopf (5) eine Öffnung (5a) auf, welche nach Herstellung des Kopfes (5) in diesen eingebracht wird.

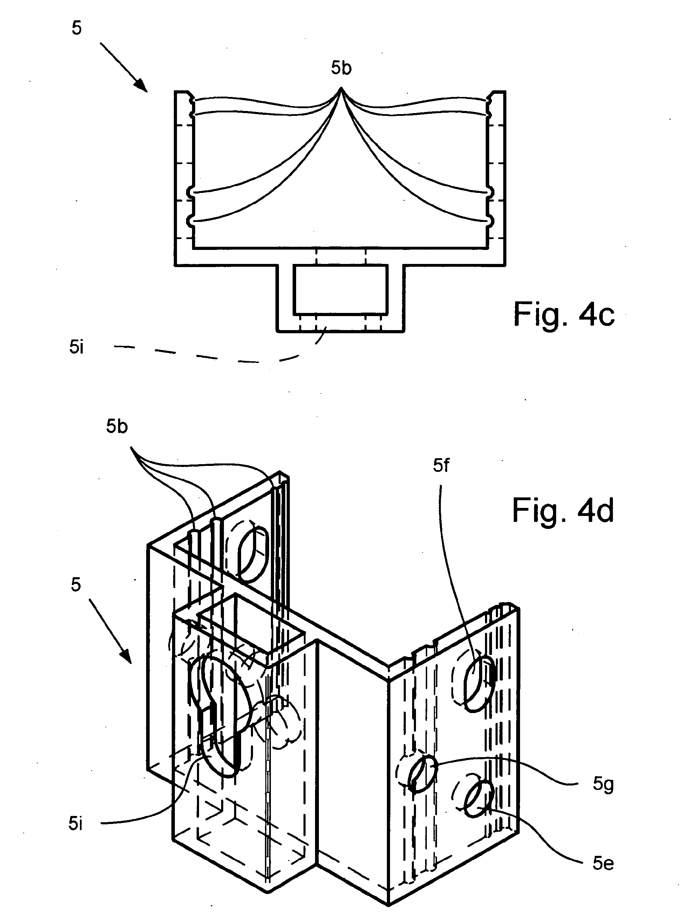

Der Montagekopf selber weist einen quadratischen Befestigungsbereich auf, bei welchem der Montagekopf (5) an dem Außenprofil (1) befestigt ist. An den Befestigungsbereich sind zwei Schenkel (5b) angeformt, welche sich bei dem gezeigten Ausführungsbeispiel parallel zueinander in Längsrichtung der Halterung erstrecken. Um den Schraubenkopf (4c) axial an dem Montagekopf (5) festzulegen, ist dieser in den Hohlraum des Befestigungsbereiches des Montagekopfes eingeführt, und zwar durch eine Öffnung (5i) in dem Steg des Befestigungsbereiches, der dem Innenprofil (2) zugewandt ist (siehe dazu auch Figur 4d).

Bei anderen Ausführungsbeispielen kann der Schraubenkopf auch auf andere Art und Weise axial an dem Montagekopf (5) festgelegt sein. So ist es beispielsweise denkbar, dass die Schraube durch die Öffnung (5a) des Montagekopfes (5) geführt ist, und die Schraube hinter der Öffnung (5a) ein Haltemittel aufweist, welches eine axiale Verschiebung der Schraube (4) zum Montagekopf (5) verhindert.

Der Montagekopf (5) ist bei dem dargestellten Ausführungsbeispiel derart gestaltet, dass dieser als Abschnitt eines Endlosprofils erhalten werden kann. Somit können sämtliche Hauptbauteile (Innenprofil, Außenprofil, Montagekopf) als Abschnitte von Endlosprofilen erhalten werden, was eine ausgesprochen kostengünstige Herstellung der Einzelteile und damit der erfindungsgemäßen Halterung ermöglicht. Vorzugsweise werden die entsprechenden Bauteile aus Aluminium oder einer Al-Legierung gefertigt, jedoch können bei entsprechenden Anwendungen auch andere Materialien Anwendung finden.

An dem Montagekopf (5) selber können mit dem Fachmann bekannten Befestigungsmitteln Elemente einer Verkleidung bzw. einer Unterkonstruktion befestigt werden. Werden mit der Halterung gemäß Figur 1a Fassadenelemente oder Elemente einer Fassadenunterkonstruktion befestigt, werden in Abhängigkeit von der Größe des Elements regelmäßig mehrere Halterungen verwendet, wobei die Halterungen vorzugsweise derart an einer Wand befestigt werden, dass die des Innenprofils vertikale verlaufen.

Figur 2 veranschaulicht eine schematische Schnittansicht eines zweiten Ausführungsbeispiels der erfindungsgemäßen Halterung, wobei auch diese Ansicht lediglich das allgemeine Prinzip der Erfindung verdeutlichen soll - Details der erfindungsgemäßen Halterung sind bei dieser Ansicht nur teilweise dargestellt. Die Schnittebene verläuft horizontal durch die Zentralachse der Halterung, so dass Figur 2 eine Draufsicht auf diese Schnittebene darstellt.

Das in Figur 2 schematisch dargestellte Ausführungsbeispiel entspricht in weiten Teilen dem bereits in Figur 1a beschriebenen, so dass nachfolgend primär auf die Bauteile, bzw. deren Anordnung in der Halterung selber, eingegangen wird, die sich von denen des ersten Ausführungsbeispiels unterscheiden.

Das Ausführungsbeispiel gemäß Figur 2 umfasst ebenfalls ein Außenprofil (1) sowie einen Befestigungsfuß (1a), wobei der Befestigungsfuß (1a) nicht einstückig mit dem Außenprofil (1), sondern als separates Bauteil ausgebildet ist. Die Halterung wird über (nicht gezeigte) Befestigungsmittel bei dem Befestigungsfuß (1a) mit einem beliebeigen Untergrund verbunden. In dem Befestigungsfuß (1) ist eine Schraube (2) axial festgelegt und erstreckt sich von dem Befestigungsfuß (1a) durch das Außenprofil (1) in einen Gewindebereich (2b, 2c) einen Innenprofils (2). Auch bei diesem Ausführungsbeispiel kann die Eingrifflänge zwischen dem Innenprofil (2) und dem Außenprofil (1) durch ein Drehen der Schraube (4) eingestellt werden, jedoch ist die Schaube (4) bei diesem Ausführungsbeispiel nicht im Montagekopf (5), sondern vielmehr im Befestigungsfuß (1a) axial festgelegt. Der Montagekopf (5) ist bei einem Befestigungsbereich (2c) des Innenprofils (2) an diesem befestigt, und weist eine Öffnung (5a) auf, durch welche auf ein Justiermittel (4b) der Schraube (4) zugegriffen werden kann. Die Öffnung (5a) in dem Montagekopf (5) wird nach Herstellung in diesen eingebracht. Die Schraube (4) umfasst ferner ein Haltemittel (6), welches eine zu starke Verminderung der Eingriffslänge zwischen den Profilen, d.h. ein Herausdrehen des Innenprofils aus dem Außenprofil, verhindert.

Auch bei diesem Ausführungsbeispiel sind die Hauptbauteile der Halterung (d.h. der Befestigungsfuß, das Innen- und das Außenprofil sowie der Montagekopf) als Abschnitte von Endlosprofilen erhaltbar, was wiederum eine kostengünstige Herstellung der einzelnen Bauteile gewährleistet.

Figur 1b zeigt eine Schnittansicht entlang der Ebene A-A von Figur 1a. In dem bei diesem Ausführungsbeispiel quadratisch ausgeführten Außenprofil (1) erstreckt sich das Innenprofil (2) mit zwei senkrechten parallelen Stegen (2', 2") in dem Außenprofil (1), wobei die beiden Stege (2', 2") des Innenprofils (2) an den Seitenwänden des Außenprofils (1) anliegen. Seitlich des Außenprofils (1) ist der Befestigungsfuß (1a) zu erkennen, der einstückig mit dem Innenprofil (1) ausgebildet ist. Zentral durch die Halterung erstreckt sich die Schraube (4) mit dem Haltemittel (6).

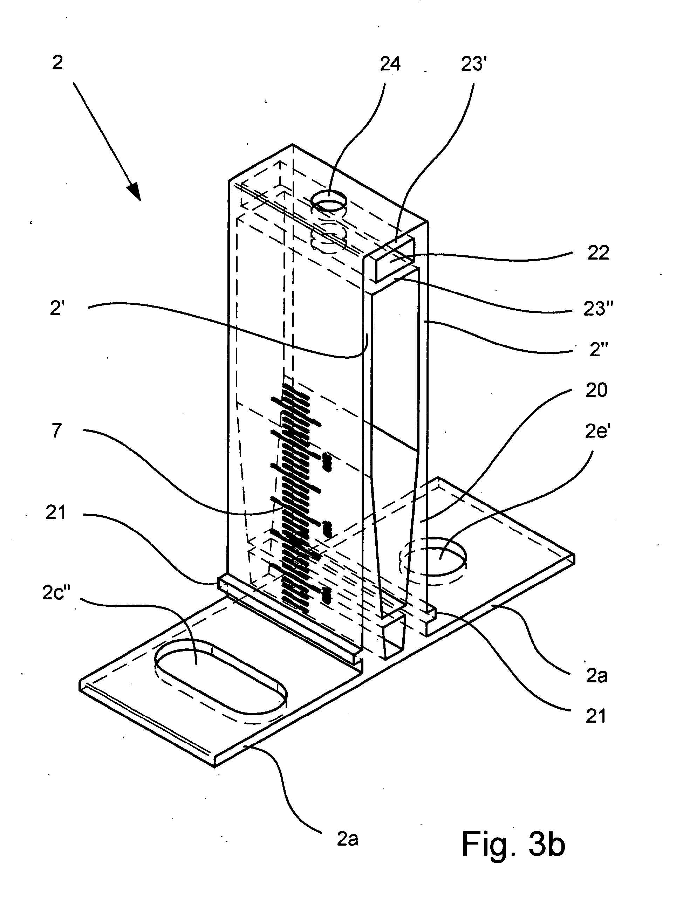

Die Figuren 3a und 3b zeigen Ansichten eines Ausführungsbeispiels eines Innenprofils (2), wobei das gezeigte Innenprofil (2) bei einem ersten in Figur 1a näher beschriebenen Ausführungsbeispiel der erfindungsgemäßen Halterung Anwendung findet.

Das Innenprofil (2) umfasst einen einstückig mit diesem ausgebildeten Befestigungsfuß (2a) mit zwei Befestigungsöffnungen (2c', 2c"), wobei eine der Befestigungsöffnungen (2c') als kreisrunde Öffnung und die andere Befestigungsöffnung als Langloch (2c") ausgebildet ist (siehe dazu insbesondere Figur 3b). Nahe des Fußbereichs weist das Innenprofil (2) zwei Anschlagmittel (21) auf, an denen das Außenprofil (1) bei maximaler Eingriffslänge zwischen Innen- und Außenprofil (2, 1) anliegt. Die Anschlagmittel (21) sind quer zur Längsrichtung der Halterung bzw. des Innenprofils (1) ausgebildet. Bei dem Ausführungsbeispiel gemäß den Figuren 3a und 3b weist das Innenprofil (2) in der Nähe des Befestigungsfußes (2a) einen verstärkten Bereich (20) auf, bei dem die Stärke der beiden Stege (2', 2") von dem Befestigungsfuß hin bis zu einem bestimmten Punkt entlang der Längsausrichtung der Stege bzw. des Innenprofils abnimmt.

Bei der dem Befestigungsfuß abgewandten Stirnseite weist das Innenprofil (2) zwei parallele Stege (23', 23") auf, die einen zu zwei Seiten hin offenen Hohlraum (22) definieren. In die Stege ist nach der Herstellung des Innenprofils - beispielsweise als Abschnitt eines Endlosprofils - eine Öffnung (24) eingebracht, durch die bei der montierten Halterung die (nicht dargestellte) Schraube geführt ist. In dem von den beiden Stegen (23', 23") gebildeten Hohlraum (22) wird bei der Montage der Halterung ein Bauteil eingebracht und in dem Hohlraum (22) axial und drehfest fixiert, welches ein Innengewinde bereitstellt, mit welchem das Außengewinde der (nicht dargestellten) Schraube wechselwirkt.

In eine Außenfläche eines Steges (2') des Innenprofils (2) ist eine Skala (7) eingeprägt, mit welcher die Eingriffslänge bzw. Eingriffstiefe zwischen Innen- und Außenprofil angezeigt wird. Die Skala (7) kann bei anderen Ausführungsbeispielen auch als Doppelskala ausgebildet sein.

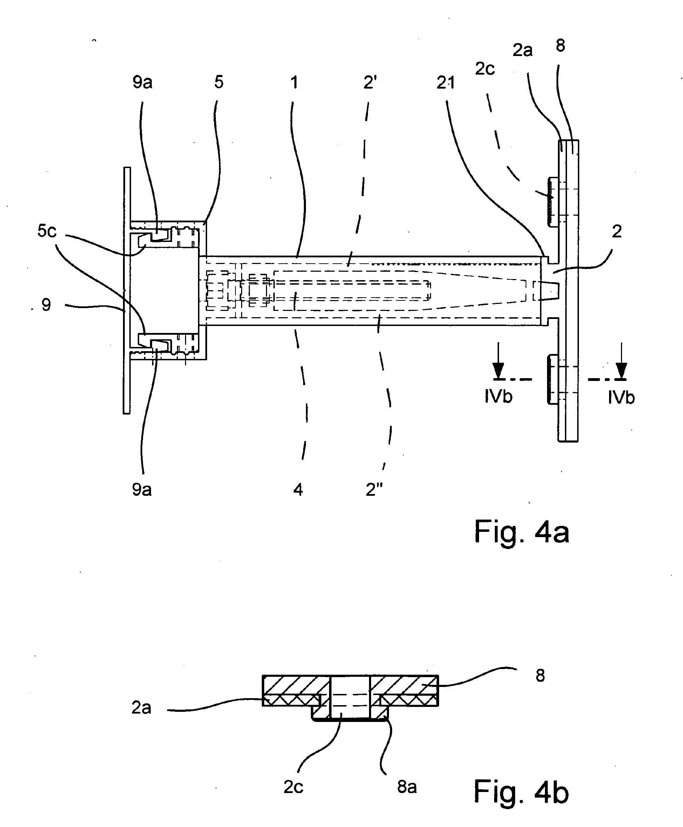

Figur 4a zeigt eine Draufsicht eines weiteren ein Ausführungsbeispiels der erfindungsgemäßen Halterung, wobei der Schnitt horizontal durch die Halterung geführt ist.

Das in Figur 4a gezeigte Ausführungsbeispiel umfasst ein Innenprofil (2) mit einem einstückig ausgeführten Befestigungsfuß (2a). Der Befestigungsfuß weist zwei Befestigungsöffnungen (2c) auf, von denen eine Befestigungsöffnung als Langloch ausgebildet sein kann (was bei der Ansicht gemäß Figur 4a nicht zu erkennen ist). An dem Befestigungsfuß (2a) ist ein Isolationsmittel (8) angeordnet, und zwar derart, dass zum einen eine thermische Isolation zwischen dem Befestigungsfuß (2a) und einem (nicht dargestellten) Untergrund und zum anderen eine thermische Isolation zwischen dem Befestigungsfuß (2a) und entsprechenden Befestigungsmitteln (nicht dargestellt) erreicht wird, mit denen die Halterung bzw. der Befestigungsfuß an dem Untergrund befestigt wird. Eine detaillierte Darstellung der Anordnung der thermischen Isolation im Bereich einer Befestigungsöffnung (2c) ist in Figur 4b dargestellt, wobei es sich bei der Ansicht in Figur 4b um einen Schnitt entlang der Achse B-B aus Figur 4a handelt.

Um die oben genannte Isolation gegenüber dem Untergrund und dem Befestigungsfuß zu erreichen, ist die Befestigungsöffnung (2c) bei dem in Figur 4b dargestellten Ausführungsbeispiel vollumfänglich von dem Isolationsmittel (8) ausgekleidet, und ferner erstreckt sich das Isolationsmittel (8) bei der dem Untergrund abgewandten Oberfläche des Befestigungsfußes (2a) im gewissen Umfang um die Öffnung herum (8a). Das Isolationsmittel bildet quasi einen Wall (8a) um die Befestigungsöffnungen (2c). Wird die Halterung nun mit entsprechenden Mitteln an dem (nicht gezeigten) Untergrund befestigt, entsteht zum einen kein Kontakt zwischen dem Befestigungsfuß (2a) und dem Untergrund und zum anderen entsteht kein Kontakt zwischen dem Befestigungsmittel selber und dem Befestigungsfuß (2a). Auf diese Weise kann der Kälteeintrag in den Untergrund minimiert werden - er findet lediglich noch über das Befestigungsmittel selber, nicht mehr aber über den Befestigungsfuß (2a) statt.

Um das Isolationsmittel (8) entsprechend an dem Befestigungsfuß (2a) anzuordnen, wird der Befestigungsfuß (2a) beispielsweise mit dem Isolationsmittel (8) umspritzt. Das Isolationsmittel kann die Stabilität des Isolationsmittel steigernde Fasen, wie beispielsweise Glaswolle oder dergleichen, enthalten.

Es wird nachfolgend wieder auf Figur 4a Bezug genommen. Neben dem Innenprofil (2) mit dem einstückig ausgebildeten Befestigungsfuß (2a) umfasst das gezeigte Ausführungsbeispiel ferner ein Außenprofil (1) sowie eine Schraube (4), mit der die Eingriffstiefe bzw. -länge zwischen Innen- und Außenprofil eingestellt wird.

An dem Außenprofil (1) ist ein Montagekopf (5) befestigt, der im nachfolgenden detaillierter beschrieben wird. Der nicht in dem Außenprofil (1) aufgenommene Abschnitt des Montagekopfes (5) ist U-förmig ausgebildet, wobei sich die beiden Schenkel des U-förmigen Abschnitts bei dem hier gezeigten Ausführungsbeispiel parallel zu der Längsachse der Halterung und somit parallel zu den Stegen (2', 2") des Innenprofils erstrekken. Detaillierter ist der Montagekopf (5) gemäß dem Ausführungsbeispiel von Figur 4a in den Figuren 4c und 4d gezeigt, wobei Figur 4c eine Draufsicht und Figur 4d eine Seitenansicht des Montagekopfes (5) veranschaulicht.

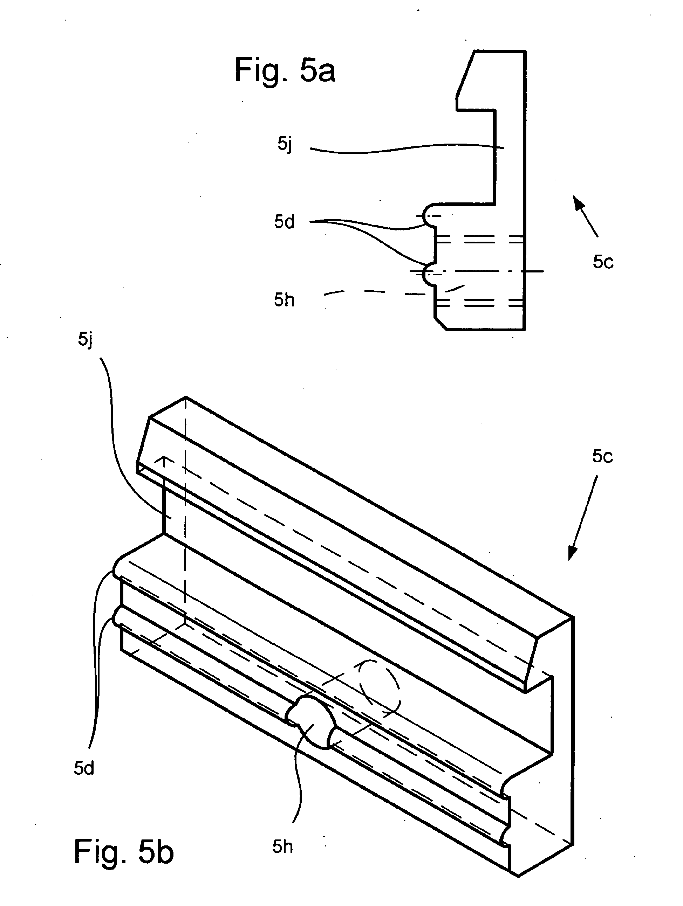

Jeder Schenkel des Montagekopfes (5) umfasst an den Schenkelinnenseiten eine Mehrzahl von Nuten (5b), die sich quer zur Schenkelrichtung bzw. Längsrichtung der Halterung erstrecken. In dem Montagekopf sind lösbar zwei Rastmittel (5c) angeordnet, die detaillierter in den Figuren 5a und 5b gezeigt sind, wobei Figur 5a eine Draufsicht und Figur 5b eine Seitenansicht des Rastmittels (5c) veranschaulicht. Jeder der Schenkel des Montagekopfes (5) umfasst ferner drei Öffnungen (5e, 5f, 5g), von denen zwei zur Befestigung eines entsprechenden Elements an dem Montagekopf (5e, 5f) und eine zur Fixierung der Rastmittel (5c) verwendet werden. Eine der zur Befestigung eines entsprechenden Elements verwendeten Öffnungen (5f) ist als Langloch ausgebildet.

Die Rastmittel (5c) umfassen zwei Vorsprünge (5d), die sich in quer zur Längsrichtung der Rastmitteln (5c) erstrekken. Diese Vorsprünge (5d) greifen im fixierten Zustand der Rastmittel (5c) in zwei der Nuten (5b) des Montagekopfes ein. Die Rastmittel (5c) selber sind über (nicht gezeigte) Befestigungsmittel lösbar und justierbar an den Schenkeln des Montagekopfes befestigt, wobei sich die Befestigungsmittel durch Öffnungen (5h) in den Rastmitteln (5c) und entsprechende Öffnungen (5g) in dem Montagekopf (5) erstrecken. Die Rastmittel sind bei ihren dem Innenprofil abgewandten Ende als Rastbereiche (5e) ausgebildet, die eine Hinterschneidung aufweisen, mit dem im montierten Zustand Elemente an dem Montagekopf rastend befestigt werden können.

Figur 4a zeigt einen solchen montierten Zustand. Die Rastmittel (5c) sind über die (nicht gezeigten) Befestigungsmittel an dem Montagekopf befestigt. Das befestigte Element (9), das in Figur 4a Doppel-T-förmig ausgebildet ist, ist über entsprechende Rastbereiche bei den Rastbereichen (5e) der Rastmittel (5c) fixiert. Gleichzeitig greifen Vorsprünge des Elements in zwei der Nuten (5b) des Montagekopfes (5) ein.

Nachfolgend wird kurz der Befestigungsvorgang des Elementes (9) an dem Montagekopf (5) mit den Rastmitteln (5c) dargelegt. Bei der Befestigung eines entsprechenden Elements (9) werden üblicherweise - je nach Länge des Elements - mehrere Halterungen verwendet.

Zunächst werden die Rastmittel (5c) über (nicht gezeigte) Befestigungsmittel lose mit dem Montagekopf verbunden. In dieser losen Konfiguration sind Befestigungsschenkel (9a) des Elements (9) in von den Schenkeln des Montagekopfes (5) sowie den Rastbereichen (5e) der Rastmittel (5d) gebildete Spalte eingeschoben. Nachfolgend werden die Befestigungsmittel angezogen und die Rastmittel (5c) damit zu den Schenkeln des Montagekopfes gezogen. Sobald eine gewisse Distanz zwischen den Rastbereichen (5e) und den Schenkeln des Montagekopfes (5) unterschritten ist, ist das Element (9) bezüglich der Längsrichtung der Halterung grob fixiert. Sobald die Befestigungsmittel weiter angezogen werden, greifen Vorsprünge der Schenkel (9a) des Elements (9) in zwei der Nuten (5b) der Schenkel des Montagekopfes (5) ein. Etwa bei gleicher Distanz greifen die Vorsprünge (5d) des Rastmittels (5c) in die zwei anderen Nuten (5b) der Schenkel des Montagekopfes (5) ein. Das Element ist nun hinsichtlich der Längsachse des Elements axial fixiert. Die Befestigung mit den Rastmittel (5c) ist jedoch lediglich derart, dass eine axiale Bewegung nicht mehr möglich ist. Das Element (9) ist nun noch so zu fixieren, dass auch eine Bewegung quer zur Schenkelrichtung des Montagekopfes bzw. der Längsachse der Halterung nur noch "gerichtet" möglich ist. Bei dem in Figur 4a gezeigten Ausführungsbeispiel handelt es sich bei der Bewegung quer zur Längsrichtung der Halterung bzw. quer zur Schenkelrichtung des Montagekopfes um eine Bewegung aus der Schnittebene, also um eine vertikale Bewegung, da Figur 4a eine Draufsicht darstellt. Für den Fall das Figur 4a beispielsweise eine Seitenansicht darstellen würde, wäre die oben genannte Bewegung eine horizontale Bewegung des Elements (9).

"Gerichtet" ist die Bewegung, da eine gewisse Bewegung quer zur Längsachse der Halterung zugelassen werden soll. Aufgrund der temperaturbedingten Längenänderung des Elements (9) ist es nämlich von Vorteil, dass man eine gewisse Bewegung bei bestimmten Halterungen zulässt. Dies vermeidet eine unnötige Beanspruchung der Befestigungsstellen Element/Montagekopf.

Um eine "gerichtete" Bewegung zu ermöglichen, wird das Element (9) lediglich bei einer der mehreren Halterungen bezüglich der vertikalen Bewegung ortsfest fixiert. Zur Befestigung eines Elements (9) wird in der Regel jedoch, wie bereits angedeutet, eine Mehrzahl von Halterungen verwendet, die über die Länge des Elements (9) verteilt sind. Um eine Fixierung des Elements (9) zu erreichen, die eine gerichtete Bewegung des Elements ermöglicht, wird das Element (9) über (nicht gezeigte) Befestigungsmittel, die durch Öffnungen (5e) (Figur 4d) geführt sind, bei einer Halterung ortsfest an dem Montagekopf befestigt, beispielsweise durch eine Verschraubung oder eine Vernietung. Durch diese ortsfeste Fixierung des Elements (9) bei einer Halterung bzw. einem Montagekopf kann sich das Element (9) nur noch ausgehend von diesem Fixpunkt bewegen und kehrt bei einer entgegen gesetzten Bewegung wieder in die Ausgangsposition zurück - die Bewegung des Elements ist somit "gerichtet".

Bei den anderen zur Befestigung des Elements (9) verwendeten Halterungen wird das Element (9) zwar mit Hilfe der Rastmittel axial an der Halterung fixiert, nicht jedoch mit Befestigungsmitteln über die Öffnungen (5e) der Montageköpfe (5) der jeweiligen Halterungen. Vielmehr wird das Element über Öffnungen (5f) in den Montageköpfen derart fixiert, das diese Befestigungsmittel eine Bewegung des Elements quer zur Längsrichtung der Halterung erlauben, die axiale Befestigung des Elements (9) jedoch unterstützen. Um dies zur ermöglichen, sind diese Öffnungen (5f) als Langloch ausgebildet. Bei der Montage werden die (nicht gezeigten) Befestigungsmittel in der Mitte der Länglöcher (5f) an dem Element (9) fixiert. Bei einer temperaturbedingten Längenänderung des Elements können die Befestigungsmittel in den Länglöchern in diesen "wandern", unterstützen aber weiterhin die axiale Fixierung des Elements an dem Montagekopf (5). Wird das Element (9) beispielsweise bei einer gegebenen Temperatur und damit einer gegeben Längenausdehnung fixiert und erhöht sich die Umgebungstemperatur, so kann sich das Element ausgehend von der ortsfesten Befestigung bei einer Halterung in eine Richtung und damit "gerichtet" ausdehnen. Dabei wandern bzw. bewegen sich die Befestigungsmitteln in den Langlöchern (5f) der anderen Montageköpfe. Bei einer anschließenden Verminderung der Umgebungstemperatur bewegen sich die Elemente (9) zurück in ihre Ausgangslage. Somit ist gewährleistet, dass die keine übermäßige Materialbelastung bei den nicht ortsfesten Befestigungsmitteln auftritt, gleichzeitig aber wird sicher gestellt, dass die Elemente nicht mit der Zeit in den Halterungen "wandern" bzw. verschieben.

## Patentansprüche

1. Halterung für Verkleidungselemente bzw. eine Verkleidungselemente-Unterkonstruktion mit
einem Innenprofil (2), das drehfest, radial fixiert und axial verschiebbar gegenüber einem Außenprofil (1) in diesem gelagert ist,
wobei eines der Profile (1, 2) einen Befestigungsfuß (1a, 2a) und das andere Profil (1, 2) einen Montagekopf (5) aufweist, wobei sich die ineinandergreifenden Profile (1, 2) in axialer Richtung (10) zwischen dem Befestigungsfuß (1a, 2a) und dem Montagekopf (5) derart erstrecken, dass der Abstand zwischen dem Befestigungsfuß (1a, 2a) und dem Montagekopf (5) durch die Länge des Eingriffs des Innenprofils in das Außenprofil bestimmt ist,
wobei sich eine Schraube (4) mit einem Schraubenkopf (4c), einem Justiermittel (4b) und einem in das Innengewinde (2b) eingreifenden Außengewinde (4a) durch zumindest einen Teil des Außenprofils (1) und des Innenprofils (2) in axialer Richtung erstreckt,
wobei das Innenprofil (2) ein sich in axialer Richtung erstrekkendes Innengewinde (2c) oder ein ein solches Innengewinde (2b) aufweisendes, drehfest zwischen zwei Stegen des Innenprofils (2) festgelegtes Bauteil aufweist, und wobei der Schraubenkopf (4c) gegenüber dem Außenprofil (1) drehbar ist, und wobei auf das Justiermittel (4b) der Schraube (4) derart zugegriffen werden kann, dass durch Drehen der Schraube (4) die Länge des Eingriffs des Innenprofils (2) in das Außenprofil (1) einstellbar ist, **dadurch gekennzeichnet, dass** das Bauteil axial zwischen den zwei Stegen des Innenprofils festgelegt ist und der Schraubenkopf gegenüber dem Außenprofil axial festgelegt ist.

2. Eine Halterung nach Anspruch 1, **dadurch gekennzeichnet, dass** das Innenprofil (2) den Befestigungsfuß (2a) aufweist und der Montagekopf (5) an dem Außenprofil (1) befestigt ist.

3. Eine Halterung nach Anspruch 2, **dadurch gekennzeichnet, dass** der Befestigungsfuß (2a) einstückig mit dem Innenprofil (2) ausgebildet ist.

4. Eine Halterung nach Anspruch 3, **dadurch gekennzeichnet, dass** der Schraubenkopf (4c) axial an dem Montagekopf (5) festgelegt ist.

5. Eine Halterung nach Anspruch 4, **dadurch gekennzeichnet, dass** der Schraubenkopf (4c) zwischen zwei Stegen des Montagekopfs (5) axial festgelegt ist und einer der Stege eine Öffnung (5a) aufweist, über die der Schraubenkopf (4c) hinter den dem Innenprofil (2) zugewandten Steg einführbar ist.

6. Eine Halterung nach Anspruch 5, **dadurch gekennzeichnet, dass** der Montagekopf (5), das Außenprofil (1) und das Innenprofil (2) samt Befestigungsfuß (2a) jeweils aus Endlosprofilen geschnittene Abschnitte sind, wobei die Schnittebenen des Montagekopfs (5) und des Innenprofils (2) jeweils parallel zur Axialrichtung und die Schnittebenen des Außenprofils (1) quer zur Axialrichtung verlaufen.

7. Eine Halterung nach Anspruch 1, **dadurch gekennzeichnet, dass** der Montagekopf (5), das Außenprofil (1), das Innenprofil (2) und der Befestigungsfuß (1a, 2a) jeweils aus Endlosprofilen geschnittene Abschnitte sind, wobei die Schnittebenen des Montagekopfs (5), des Innenprofils (2) und des Befestigungsfußes jeweils parallel zur Axialrichtung und die Schnittebenen des Außenprofils (1) quer zur Axialrichtung verlaufen.

8. Eine Halterung nach einem der Ansprüche 1 bis 7, wobei der Montagekopf (5), das Außen- und das Innenprofil (1, 2) sowie der Befestigungsfuß (1a, 2a) aus Aluminium oder einer Aluminiumlegierung gefertigt sind.

9. Eine Halterung nach einem der Ansprüche 1 bis 8, **dadurch gekennzeichnet, dass** der Schraubenkopf (4c) zwischen zwei Stegen des Befestigungsfußes (1a) axial festgelegt ist und einer der Stege eine Öffnung (5b) aufweist, über die der Schraubenkopf (4c) hinter den dem Außenprofil (2) zugewandten Steg einführbar ist.

10. Eine Halterung nach einem der Ansprüche 1 bis 9, **dadurch gekennzeichnet, dass** an dem Befestigungsfuß (1a, 2a) ein Isolationsmittel (8) derart angeordnet ist, dass eine thermische Isolation zwischen dem Befestigungsfuß (1a, 2a) und einem Untergrund und zwischen dem Befestigungsfuß (1a, 2a) und Mitteln zum Befestigen des Befestigungsfußes (1a, 2a) an dem Untergrund gegeben ist.

11. Eine Halterung nach einem der Ansprüche 1 bis 10, **dadurch gekennzeichnet, dass** die Schraube ein Haltemittel (6) aufweist, das einen Anschlag für das Innenprofil (2) bereitstellt.

12. Eine Halterung nach einem der Ansprüche 1 bis 11, **dadurch gekennzeichnet, dass** in Längsrichtung des Innenprofils (2) auf diesem eine Skala (7) angeordnet ist.

13. Eine Halterung nach einem der Ansprüche 1 bis 12, **dadurch gekennzeichnet, dass** der Montagekopf (5) U-förmig ausgebildet ist und an den Schenkelinnenseiten jeweils zumindest eine Nut (5b) aufweist, wobei sich die zumindest eine Nut (5b) quer zur Schenkelrichtung erstreckt.

14. Eine Halterung nach Anspruch 13, **dadurch gekennzeichnet, dass** zumindest einer der Schenkel des Montagekopfes (5) zumindest zwei Bohrungen (5e, 5f) aufweist, von denen zumindest eine als sich quer zur Schenkelrichtung erstreckendes Langloch (5f) ausgebildet ist.

15. Eine Halterung nach Anspruch 14, **dadurch gekennzeichnet, dass** in dem U-förmigen Montagekopf (5) lösbar zumindest ein Rastmittel (5c) mit zumindest einem Vorsprung (5d) lösbar und justierbar angeordnet ist, wobei der zumindest eine Vorsprung (5d) einer der Nuten (5b) an einer Schenkelinnenseite zugeordnet ist und in einem Befestigungszustand in diese eingreift.

## Claims

1. A mounting for cladding elements or a support structure for cladding elements including an inner profile (2), which is radially fixed and mounted in an outer profile (1) so as to be rotationally fixed and axially movable with respect to it, wherein one of the profiles, (1,2) has a fastening foot (1a, 2a) and the other profile, (1,2) has a mounting head (5), wherein the engaging profiles, (1,2) extend in the axial direction (10) between the fastening foot (1a, 2a) and the mounting head (5) such that the distance between the fastening foot (1a, 2a) and the mounting head (5) is determined by the length of the engagement of the inner profile in the outer profile, wherein a screw (4) with a screw head (4c), an adjustment means (4b) and an external screw thread (4a) meshing with the internal screw thread (2b) extends through at least a portion of the outer profile (1) and the inner profile (2) in the axial direction, wherein the inner profile (2) has an internal screw thread (2c) extending in the axial direction or a component rotationally fixedly secured between two webs of the inner profile (2) which has such an internal screw thread (2b) and wherein the screw head (4c) is rotatable with respect to the outer profile (1) and wherein the adjustment needs (4b) of the screw (4) can be grasped such that the length of the engagement of the inner profile (2) in the outer profile (1) is adjustable by rotating the screw (4), **characterised in that** the component is axially secured between the two webs of the inner profile and the screw head is axially fixed with respect to the outer profile.

2. A mounting as claimed in claim 1, **characterised in that** the inner profile (2) affords the fastening foot (2a) and the mounting head is secured to the outer profile (1).

3. A mounting as claimed in claim 2, **characterised in that** the fastening foot (2a) is integral with the inner profile (2).

4. A mounting as claimed in claim 3, **characterised in that** the screw head (4c) is axially fixed to the mounting head (5).

5. A mounting as claimed in claim 4, **characterised in that** the screw head (4c) is axially fixed between two webs of the mounting head (5) and one of the webs has an opening (5a), via which the screw head (4c) may be introduced behind the web directed towards the inner profile (2).

6. A mounting as claimed in claim 5, **characterised in that** the mounting head (5), the outer profile (1) and the inner profile (2) together with the fastening foot (2)a are each sections cut from endless profiles, wherein the cut planes of the mounting head (5) and of the inner profile (2) each extend parallel to the axial direction and the cut planes of outer profile (1) extend transverse to the axial direction.

7. A mounting as claimed in claim 1, **characterised in that** the mounting head (5), the outer profile (1), the inner profile (2) and the fastening foot (1a, 2a) are each sections cut from endless profiles, wherein the cut planes of the mounting head (5), the inner profile (2) and the fastening foot each extend parallel to the axial direction and the cut planes of the outer profile (1) extend transverse to the axial direction.

8. A mounting as claimed in one of claims 1 to 7, wherein the mounting head (5), the outer and inner profiles (1,2) and the fastening foot (1a, 2a) are made of aluminium or an aluminium alloy.

9. A mounting as claimed in one of claims 1 to 8, **characterised in that** the screw head (4c) is axially fixed between two webs of the fastening foot (1)a and one of the webs has an opening (5b), via which the screw head (4c) may be introduced behind the web directed towards the outer profile (2).

10. A mounting as claimed in one of claims 1 to 9, **characterised in that** insulating means (8) are so arranged on the fastening foot (1a, 2a) that there is thermal insulation between the fastening foot (1a, 2a) and a substrate and between the fastening foot (1a, 2a) and the means for fastening the fastening foot (1a, 2a) to the substrate.

11. A mounting as claimed in one of claims 1 to 10, **characterised in that** the screw has a retaining means (6) which provides a stop for the inner profile (2).

12. A mounting as claimed in one of claims 1 to 11, **characterised in that** a scale (7) is disposed on the inner profile (2) in its longitudinal direction.

13. A mounting as claimed in one of claims 1 to 12, **characterised in that** the mounting head (5) is of U-shaped construction and has at least one groove (5b) on each of the inner surfaces of the limbs, wherein the at least one groove (5b) extends transverse to the direction of the limb.

14. A mounting as claimed in claim 13, **characterised in that** at least one of the limbs of the mounting head (5) has at least two bores (5e), (5f), at least one of which is constructed in the form of an elongate hole (5f) extending transverse to the direction of the limb.

15. A mounting as claimed in claim 14, **characterised in that** at least one locking means (5c) with at least one projection (5d) is releasably and adjustably disposed in the U-shaped mounting head (5), wherein the at least one projection (5d) is associated with one of the grooves (5b) in a limb inner surface and engages in it in a fastened state.

## Revendications

1. Fixation pour éléments de revêtement ou structure de support pour éléments de revêtement, comprenant:
un profilé interne (2), qui est monté solidaire en rotation, fixé radialement et déplaçable axialement par rapport à un profilé externe (1) dans celui-ci,
dans lequel l'un des profilés (1, 2) présente un pied de fixation (1a, 2a) et l'autre profilé (1, 2) présente une tête de montage (5), dans lequel les profilés (1, 2) s'engageant l'un dans l'autre s'étendent dans la direction axiale (10) entre le pied de fixation (1a, 2a) et la tête de montage (5) de sorte que la distance entre le pied de fixation (1a, 2a) et la tête de montage (5) soit déterminée par la longueur de l'engagement du profilé interne dans le profilé externe,
dans lequel une vis (4) avec une tête de vis (4c) , un moyen d'ajustage (4b) et un filet externe (4a) s'engageant dans le filet interne (2b) s'étend à travers au moins une partie du profilé externe (1) et du profilé interne (2) dans la direction axiale,
dans lequel le profilé interne (2) présente un filet interne (2c) s'étendant dans la direction axiale ou un composant présentant un tel filet interne (2b) et monté de manière solidaire en rotation entre deux barrettes du profilé interne (2), et
dans lequel la tête de vis (4c) peut tourner par rapport au profilé externe (1) et dans lequel la vis (4) peut avoir accès au moyen d'ajustage (4b) de manière à pouvoir régler, par rotation de la vis (4), la longueur de l'engagement du profilé interne (2) dans le profilé externe (1),
**caractérisée en ce que** le composant est fixé axialement entre les deux barrettes du profilé interne et la tête de vis est fixée axialement par rapport au profilé externe.

2. Fixation selon la revendication 1, **caractérisée en ce que** le profilé interne (2) présente le pied de fixation (2a) et la tête de montage (5) est fixée sur le profilé externe (1).

3. Fixation selon la revendication 2, **caractérisée en ce que** le pied de fixation (2a) est formé d'un seul tenant avec le profilé interne (2).

4. Fixation selon la revendication 3, **caractérisée en ce que** la tête de vis (4c) est fixée axialement sur la tête de montage (5).

5. Fixation selon la revendication 4, **caractérisée en ce que** la tête de vis (4c) est fixée axialement entre deux barrettes de la tête de montage (5) et l'une des barrettes présente une ouverture (5a), par le biais de laquelle la tête de vis (4c) peut être introduite derrière la barrette tournée vers le profilé interne (2).

6. Fixation selon la revendication 5, **caractérisée en ce que** la tête de montage (5), le profilé externe (1) et le profilé interne (2) conjointement avec le pied de fixation (2a) sont respectivement des sections découpées dans des profilés sans fin, dans lequel les plans de coupe de la tête de montage (5) et du profilé interne (2) s'étendent respectivement parallèlement à la direction axiale et les plans de coupe du profilé externe (1) transversalement à la direction axiale.

7. Fixation selon la revendication 1, **caractérisée en ce que** la tête de montage (5), le profilé externe (1), le profilé interne (2) et le pied de fixation (1a, 2a) sont respectivement des sections découpées dans des profilés sans fin, dans lequel les plans de coupe de la tête de montage (5), du profilé interne (2) et du pied de fixation s'étendent respectivement parallèlement à la direction axiale et les plans de coupe du profilé externe (1) transversalement à la direction axiale.

8. Fixation selon l'une quelconque des revendications 1 à 7, dans lequel la tête de montage (5), le profilé externe et le profilé interne (1, 2), ainsi que le pied de fixation (1a, 2a), sont fabriqués en aluminium ou en alliage d'aluminium.

9. Fixation selon l'une quelconque des revendications 1 à 8, **caractérisée en ce que** la tête de vis (4c) est fixée axialement entre deux barrettes du pied de fixation (1a) et une des barrettes présente une ouverture (5b), par le biais de laquelle la tête de vis (4c) peut être introduite derrière la barrette tournée vers le profilé externe (2).

10. Fixation selon l'une quelconque des revendications 1 à 9, **caractérisée en ce que** l'on aménage un moyen isolant (8) sur le pied de fixation (1a, 2a) de manière à appliquer une isolation thermique entre le pied de fixation (1a, 2a) et une base et entre le pied de fixation (1a, 2a) et des moyens destinés à fixer le pied de fixation (1a, 2a) sur la base.

11. Fixation selon l'une quelconque des revendications 1 à 10, **caractérisée en ce que** la vis présente un moyen de maintien (6) qui forme une butée pour le profilé interne (2).

12. Fixation selon l'une quelconque des revendications 1 à 11, **caractérisée en ce qu'**il est aménagé une échelle (7) dans la direction longitudinale du profilé interne (2) sur celui-ci.

13. Fixation selon l'une quelconque des revendications 1 à 12, **caractérisée en ce que** la tête de montage (5) est conformée en U et présente respectivement au moins une rainure (5b) sur les faces internes des branches, la au moins une rainure (5b) s'étendant transversalement à la direction des branches.

14. Fixation selon la revendication 13, **caractérisée en ce qu'**au moins l'une des branches de la tête de montage (5) présente au moins deux orifices (5e, 5f) , dont au moins l'un se présente sous la forme d'un trou oblong (5f) s'étendant transversalement à la direction des branches.

15. Fixation selon la revendication 14, **caractérisée en ce que**, de manière amovible dans la tête de montage (5) en forme de U, au moins un moyen d'arrêt (5c) avec au moins une saillie (5d) est aménagé de manière amovible et ajustable, la au moins une saillie (5d) étant affectée à l'une des rainures (5b) sur une face interne des branches et s'engageant à l'état de fixation dans celle-ci.
